# FASCICULE DE BREVET EUROPEEN

(11) **EP 2 177 804 B1**
(45) Date de publication et mention de la délivrance du brevet: **25.09.2019**
(21) Numéro de dépôt: 09290773.2
(22) Date de dépôt: 12.10.2009
(51) Int. Cl.: F16L 9/133

(54) **Canalisation pour tuyauterie de transfert de fluides de véhicule aérien ou spatial, son procédé de fabrication et structure aéronautique l'incorporant**
Leitung für Luft- oder Raumfahrzeuge, dessen Herstellungsmethode und dazugehöriges Fahrzeug
Conduit for space or aircrafts, its production method and the respective aeronautic structure

(30) Priorité: 17.10.2008 FR 0805782
(43) Date de publication de la demande: 21.04.2010
(73) Titulaire: Hutchinson, 75008 Paris (FR)
(72) Inventeur: Ciolczyk, Jean-Pierre, 45200 Montargis (FR); Dolez, Marc, 06950 Falicon (FR); Florentz, Bertrand, 45200 Paucourt (FR)
(74) Mandataire: Gevers & Orès

(56) Documents cités:
- EP-A- 0 492 129
- EP-A- 1 264 717
- DE-A1- 10 359 912
- US-A1- 2005 257 847

## Description

La présente invention concerne une canalisation coudée et/ou cintrée en particulier pour tuyauterie de transfert de fluides pour véhicule aérien ou spatial, telle qu'une tuyauterie de carburant montée dans ou sous les ailes d'un avion, une structure aéronautique incorporant cette canalisation et un procédé de fabrication de cette dernière. L'invention se rapporte plus particulièrement à des canalisations tridimensionnelles (i.e. dont l'axe de symétrie d'une extrémité à l'autre s'étend dans les trois dimensions).

Les tuyauteries ou lignes de carburant des avions actuels sont usuellement réalisées en métal (e.g. aluminium, acier inoxydable ou titane), à l'instar des ailes dans lesquelles elles sont logées. On commence néanmoins depuis quelques années à concevoir des ailes et des tuyauteries de carburant en matériaux composites, afin d'alléger dans la mesure du possible ces tuyauteries et donc la structure les incorporant (e.g. la voilure, le caisson central ou le mât moteur) ou de réduire la conductivité électrique de ces tuyauteries pour éviter les risques de foudroiement, notamment dans le cas où ces tuyauteries sont fixées sur des structures elles-mêmes composites et donc moins conductrices que le métal.

On peut par exemple citer le document WO-A1-2006/136597 pour un exemple de canalisation composite, comportant deux conduits interne et externes coaxiaux séparés par des entretoises et qui sont au moins en partie réalisés en un matériau thermodurcissable composite, tel qu'une résine époxy renforcée par des fibres de carbone. On peut également citer le document EP-A1-1 878 562 qui enseigne de fabriquer des canalisations pour tuyauteries de conditionnement d'air destinées à des aéronefs, incorporant des tuyaux à plis thermoplastiques ou thermodurcissables, par exemple à base d'une résine phénolique pour la matrice thermodurcissable. Le document GB1031640 montre une canalisation similaire.

Actuellement la plupart des tuyaux tridimensionnels sont en métal, étant obtenus par cintrage ou par soudage. Ils sont donc relativement lourds, de par la densité élevée du matériau métallique utilisé. Les composites représentent donc une solution intéressante pour l'allégement de ces tuyaux, notamment pour les tuyaux de lignes de carburant ou de lignes hydrauliques ou de lignes d'extinction aéronautiques, où le poids est un important facteur de performance, d'économie et de réduction des consommations et des émissions.

Cependant, lorsqu'on réalise des tuyaux en composite de forme tridimensionnelle, leur réalisation requiert :
- un moule rigide associé à une vessie gonflable dont le rôle est de plaquer sous pression la paroi du tuyau dans le moule, ou bien
- un noyau rigide (de type extractible, fusible, soluble, par exemple) sur lequel on drape soit des fibres de renfort sèches que l'on infuse sous vide puis réticule en étuve, soit des pré-imprégnés (« prepregs » en anglais, i.e. matériaux en feuilles imprégnés d'une résine thermodurcissable dont la polymérisation n'est pas achevée) que l'on consolide puis réticule en étuve ou autoclave.

Un inconvénient majeur de ces tuyaux connus et de leurs procédés de fabrication réside dans leur coût relativement élevé, car ils nécessitent des outillages coûteux (moules et vessies, notamment) ainsi que des noyaux coûteux (cas des noyaux extractibles, par exemple), des noyaux à remplacer régulièrement après réalisation de quelques dizaines de pièces (e.g. vessies gonflables, mandrins souples), voire même des noyaux perdus pour chaque pièce fabriquée (cas des noyaux solubles ou fusibles).

Un but de la présente invention est de proposer une canalisation qui permette de réaliser des tuyauteries ou tubulures de formes tridimensionnelles complexes et qui remédie également à ces inconvénients, la canalisation comportant au moins un tuyau multicouches comprenant une couche radialement interne réalisée en un matériau thermoplastique ou élastomère thermoplastique qui est étanche et chimiquement résistant au fluide transporté, et au moins une couche de renforcement située radialement au dessus de la couche interne.

A cet effet, une canalisation selon l'invention est telle que le tuyau présente une géométrie cintrée et/ou coudée, de préférence tridimensionnelle et pouvant être complexe, et en ce que la couche de renforcement est réalisée en un matériau composite à base de moyens de renfort de préférence fibreux (e.g. des fibres de carbone, verre ou aramide) qui sont en contact intime et direct avec la couche sous-jacente, telle que la couche interne, ladite géométrie étant obtenue suivant l'une ou l'autre des deux méthodes a) et b) suivantes :
a) la couche interne est préalablement formée à chaud indépendamment de la couche de renforcement pour la faire passer d'une géométrie initiale rectiligne à cette géométrie cintrée et/ou coudée, lesdits moyens de renfort étant au choix :
   (i) imprégnés d'une matrice thermodurcissable, la couche de renforcement formant un composite thermodurcissable à matrice thermodurcissable de température de réticulation inférieure à la température de fusion de ladite couche sous-jacente, ou
   (ii) soit des fibres de renfort entremêlées avec des fibres ou poudres thermoplastiques, soit imprégnés d'un revêtement polymérique plastique qui est réticulable par voie chimique, la couche de renforcement formant dans ces deux cas un composite thermoplastique à matrice thermoplastique de température de transformation inférieure à celle de ladite couche sous-jacente ; ou bien
b) la couche interne, dans sa géométrie initiale rectiligne, est préalablement recouverte de la couche de renforcement dans laquelle lesdits moyens de renfort sont des fibres de renfort entremêlées avec un matériau thermoplastique sous forme de fibres, d'un film ou de poudre, puis cette couche interne ainsi recouverte est moulée par soufflage après ramollissement pour conférer au tuyau sa géométrie cintrée et/ou coudée, la couche de renforcement obtenue formant un composite à matrice thermoplastique.

On notera d'une manière générale qu'une canalisation selon l'invention, qu'elle soit obtenue par la méthode a) ou b), est telle que sa couche interne est fonctionnelle à la fois pour sa fonction de résistance au fluide transporté et pour l'application directe par contact intime (e.g. par chaussage ou drapage) de la couche de renforcement. Comme cela sera détaillé dans la suite de la présente description, cette couche interne est ainsi non seulement intimement liée au reste du tuyau, mais sert en outre à sa fabrication en formant un noyau pour l'application *in situ* de cette couche de renforcement.

En référence à l'alternative (i) de la méthode a), on notera qu'un intérêt essentiel de cette structure hybride thermoplastique/thermodurcissable consiste à pouvoir réticuler la matrice thermodurcissable de la couche de renforcement sans provoquer la fusion de la couche interne. Par exemple, la réticulation d'une résine époxy peut s'effectuer assez rapidement à des températures voisines de 140° C sur une couche interne thermoplastique dont le point de fusion est par exemple supérieur à 170° C (cas d'un polyamide).

En référence à la méthode b), on notera que le composite à matrice thermoplastique qui est formé par la couche de renforcement correspondante peut être tel que cette matrice présente une température de transformation variant dans une large plage et pouvant par exemple être voisine de celle de la couche sous-jacente, telle que la couche interne. Cette méthode b) présente donc, comparée à la méthode a), l'avantage de ne pas impliquer une limitation de la température de transformation de la matrice utilisée. Un autre avantage de cette méthode b) est que l'on peut, par le soufflage mis en oeuvre pour l'obtention de la géométrie coudée et/ou cintrée, mieux consolider la matrice thermoplastique jusqu'à même lui conférer l'aspect poli miroir du moule.

On notera également, avantage intéressant de cette invention, que le réglage des propriétés mécaniques, par exemple tenue en pression/dépression ou rigidité du tuyau, peut être réalisé en ajustant le nombre et l'épaisseur des moyens de renforts choisis mais également en disposant des renforts à des endroits très précis sous forme de manchons localisés.

Avantageusement, lesdits moyens de renfort peuvent être de type fibreux, étant de préférence choisis dans le groupe constitué par une ou plusieurs tresses, un ou plusieurs tricots, un ou plusieurs plis de tissu, des rubans ou nappes unidirectionnels, des complexes de type à âme non tissée de part et d'autre de laquelle sont cousus ou tricotés des mats ou tissus (e.g. de dénomination commerciale « Rovicore »), des complexes à base de fibres de renfort thermodurcies (e.g. de dénomination commerciale « Injectex ») et des combinaisons de ces moyens de renfort par exemple avec un matériau amortissant, tel qu'un élastomère.

Encore plus avantageusement, lesdits moyens de renfort peuvent comprendre une ou plusieurs tresses cylindriques optionnellement séparées entre elles par des couches amortissant les vibrations, la ou chaque tresse étant de préférence réalisée en carbone ou aramide pour leur légèreté.

Egalement avantageusement, l'angle de tressage que fait la ou chaque tresse avec l'axe de symétrie du tuyau sera sensiblement égal à 54° sur au moins une portion du tuyau, de sorte à éviter le fluage en température de la couche sous-jacente, telle que la couche interne, ou de la matrice thermoplastique de la couche de renforcement, et à maintenir cette tresse en équilibre sur ces couches lorsqu'elles sont mises sous pression. On notera toutefois que cet angle de tressage peut varier dans des proportions plus ou moins grandes autour de 54° le long du tuyau, notamment à l'emplacement des prises de rayons (e.g. des coudes ou portions cintrées) et des éventuels changements de diamètre du tuyau.

De préférence, la couche interne est à base d'au moins un polymère thermoplastique choisi dans le groupe constitué par les polyamides (PA), les polyétherimides (PEI), les polysulfures de phénylène (PPS), les polyétheréthercétones (PEEK), les polyéthercétonecétones (PEKK) et leurs mélanges.

A titre encore plus préférentiel, la couche interne est à base d'au moins un polyamide qui est choisi dans le groupe constitué par les PA6, PA6.6, PA11, PA12 et leurs mélanges, et qui peut présenter une température de transition vitreuse Tg réduite et par exemple voisine de 45° C (au-delà de laquelle le polyamide est sujet au fluage), ledit angle de tressage de 54° évitant le fluage en température de cette couche interne à des températures d'utilisation supérieures. En effet, cet angle permet l'emploi de ces polymères thermoplastiques très peu coûteux dont la température Tg se situe en dessous des températures maximales d'utilisation, alors que leur température de fusion est supérieure par exemple à 170° C, sans risquer de fluage même lors d'une utilisation en continu à 100° C par exemple, ceci grâce au blocage dimensionnel de la couche interne par les moyens de renfort.

En variante, la couche interne peut être à base d'au moins un élastomère thermoplastique, de préférence un alliage de vulcanisats thermoplastiques (TPV).

Bien entendu, le matériau de la couche interne est également choisi pour sa bonne adhésion à la matrice thermodurcissable utilisée pour consolider les moyens de renfort au sein de la couche de renforcement.

On notera que si les résines thermodurcissables (e.g. les résines époxy, bismaléimides (BMI), phénoliques, polyesters, vinylesters et polyétherimide (PEI)) sont à la limite utilisables dans la couche interne, celle-ci est ici avantageusement réalisée en polymère thermoplastique ou en élastomère thermoplastique, du fait que ces polymères présentent :
- une meilleure résistance chimique aux fluides véhiculés,
- une meilleure étanchéité même à de très faibles épaisseurs (entre 0,3 et 1 mm),
- une plus grande légèreté (densité souvent égale à 1 au lieu de 1,5 environ pour les résines thermodurcissables),
- une meilleure résistance au choc, et
- une facilité d'extrusion et donc un coût réduit.

Selon un mode préférentiel de réalisation de l'invention, les moyens de renfort de la couche de renforcement sont directement drapés ou chaussés sur la couche interne, laquelle forme alors un noyau de drapage fonctionnel.

Selon un autre mode de réalisation de l'invention, le tuyau comprend, radialement entre la couche interne et la couche de renforcement adjacente, au moins une couche intermédiaire de conductivité électrique ajustée par exemple prévue pour réduire la conductivité électrique globale du tuyau vis-à-vis de risques de foudroiement et d'explosion du fluide transporté, ou inversement augmentée par exemple vis-à-vis d'un besoin de décharger électrostatiquement le fluide circulant dans le tuyau, lesdits moyens de renfort de la couche de renforcement étant directement drapés sur la couche intermédiaire sous-jacente.

En référence à l'alternative (i) de la méthode a) selon l'invention, les moyens de renfort qui sont inclus dans la couche de renforcement sont avantageusement directement drapés ou chaussés sur la couche sous-jacente, telle que la couche interne.

Selon un premier exemple de l'invention, ces moyens de renfort sont avantageusement drapés à sec et infusés sous vide au moyen de ladite matrice thermodurcissable surmoulée à l'état liquide visqueux, selon un procédé dit d'infusion. Dans ce cas, la couche interne peut être avantageusement à base d'au moins un polyamide choisi dans le groupe constitué par les PA6, PA6.6, PA11, PA12 et leurs mélanges par exemple, cette couche interne présentant une épaisseur minimisée en relation avec la dépression utilisée pour cette infusion sous vide (pression relative inférieure ou égale à 1 bar). En effet, cette épaisseur peut avantageusement être nettement inférieure à 1 mm pour une couche interne en PA6, 6.6, 11 ou 12 non renforcé de 50 mm de diamètre par exemple. Ainsi, le tuyau obtenu peut être particulièrement léger, du fait d'une épaisseur moindre que celle requise pour tenir à la pression de plusieurs bars dans un autoclave.

Conformément à ce premier exemple, ces moyens de renfort sont de préférence infusés sous vide au moyen d'une résine liquide thermodurcissable choisie dans le groupe constitué par les résines époxy, bismaléimides, phénoliques, polyesters, vinylesters, polyétherimide et leurs mélanges. A titre encore plus préférentiel, la couche de renforcement forme un composite thermodurcissable résine époxy/carbone ou époxy/aramide ou époxy/verre, étant par exemple formé d'une ou plusieurs tresses en carbone ou aramide ou verre infusées avec une résine époxy, par exemple.

En relation avec ce premier exemple, on notera que la couche interne forme un noyau à la fois de drapage et d'infusion pour ces moyens de renfort.

On notera également que ces moyens de renfort, tels qu'une ou plusieurs tresses, qui sont drapés à sec sur la couche sous-jacente, telle que la couche interne, prennent ainsi facilement les rayons de courbure de cette couche préalablement cintrée, moulée et/ou coudée.

On notera en outre que, pour des tuyauteries de carburant imposant d'éviter les arcs électriques qui peuvent provoquer des explosions, le matériau thermoplastique ou élastomère thermoplastique de la couche interne peut être rendu conducteur, par exemple par addition de charges (e.g. noir de carbone, graphite, etc...) ou de fibres conductrices (e.g. fibres de carbone courtes, longues ou continues) pour évacuer les charges électrostatiques générées par les déplacements du fluide à l'intérieur du tuyau.

De même, des renforts conducteurs dépassants, tels que des tresses, pourront être rajoutés lors de l'infusion pour permettre de conduire les charges électrostatiques vers les supports de fixation ou les structures voisines sans provoquer d'étincelage (« arcing » en anglais) vers ces structures.

Selon un second exemple de l'invention, ces moyens de renfort sont avantageusement pré-imprégnés par ladite matrice thermodurcissable, consolidés au contact de la couche sous-jacente du tuyau puis réticulés. On notera toutefois que cette pré-imprégnation présente l'inconvénient relatif d'impliquer un coût plus élevé que celui inhérent à la technique d'infusion.

En référence à l'alternative (ii) de la méthode a) selon l'invention, la couche de renforcement et les moyens de renfort qui y sont inclus peuvent être formés :
- soit d'un élément composite continu tel qu'un ruban qui contient lesdites fibres de renfort entremêlées avec lesdites fibres ou poudres thermoplastiques et qui est enroulé autour de la couche interne,
- soit d'une ou plusieurs tresses imprégnées par ledit revêtement polymérique plastique réticulable par voie chimique, de préférence par un moulage de type réaction « RIM » par exemple à base d'un polyuréthanne (ces tresses étant par exemple réalisées en fibres de carbone).

On notera que la température de transformation de la matrice thermoplastique, qui est choisie inférieure à celle de la couche interne sous-jacente, évite toute déformation ou altération de la géométrie ou des propriétés de cette couche interne pendant la consolidation de la couche de renforcement qui s'effectue au-dessus de sa température de fusion. La matrice thermoplastique ou oligomères réticulable peut être sous forme liquide de sorte à être infusable, ou bien utilisable dans tout autre procédé d'imprégnation permettant une compaction et une réticulation à très basse pression.

En référence à la méthode b) selon l'invention, lesdites fibres de renfort, telles que des fibres de carbone, de verre ou d'aramide, sont entremêlées avec ledit matériau thermoplastique pour former la couche de renforcement qui est drapée ou chaussée sur la couche sous-jacente, telle que la couche interne.

Avantageusement, le tuyau peut optionnellement comprendre une gaine externe définissant sa surface radialement extérieure, cette gaine étant par exemple destinée à améliorer les propriétés physiques et la résistance chimique du tuyau et/ou à amortir les vibrations reçues et/ou à assurer une isolation électrique et/ou thermique et/ou à améliorer la tenue aux impacts du tuyau.

Selon une autre caractéristique de l'invention, la canalisation peut incorporer des brides de raccordement du tuyau au reste de la tuyauterie, chaque bride étant réalisée en un matériau métallique, thermoplastique ou thermoplastique composite et étant solidaire desdits moyens de renfort en recouvrant partiellement ces derniers par surmoulage direct en une extrémité du tuyau, de telle sorte que ces moyens de renfort assurent la continuité d'efforts mécanique de la canalisation.

Ces moyens de renforts peuvent être alors enserrés sur leurs deux faces radialement interne et externe par deux collerettes que comporte chaque bride, et sont solidarisés avec ces collerettes lors de l'infusion par ladite matrice thermodurcissable surmoulée sur ces moyens de renfort, en référence à l'alternative (i) de l'étape a) selon l'invention. Chaque extrémité libre de ces moyens de renforts, tels qu'une tresse, est ainsi intimement liée à la bride correspondante lors de cette unique opération d'infusion, conférant ainsi une tenue mécanique maximale au tuyau pourvu des brides.

De préférence, chaque bride peut être réalisée en un matériau thermoplastique ou thermoplastique composite et elle est emmanchée ou soudée par rotation sur la face radialement interne de la couche interne du tuyau. On notera que cet emmanchement peut être facilité par la nature élastomère thermoplastique de la couche interne, et qu'en variante ces brides pourraient être collées, serties ou emmanchées, puisque le thermoplastique présente l'avantage de rester déformable contrairement à un thermodurcissable.

Egalement à titre préférentiel, chaque bride peut contenir des inserts électriquement conducteurs par exemple métalliques ou de type tresse(s) conductrice(s), sur lesquels elle est surmoulée, de sorte à obtenir une conductivité électrique déterminée pour la canalisation, rendue ainsi plus ou moins conductrice ou isolante, ou à pouvoir la connecter électriquement aux structures avoisinantes (mises à la masse).

Les brides peuvent être chargées ou pas par des fibres ou charges qui peuvent avoir plusieurs rôles :
- pour le renforcement : fibres courtes ou longues, et
- pour la conductivité électrique : différentes charges peuvent être incorporées dans ces brides pour ajuster leur conductivité.

De plus, la forme et les contacts internes des brides peuvent permettre aussi d'assurer une équi-potentialité électrique entre l'intérieur et l'extérieur du tuyau.

Une structure aéronautique selon l'invention (e.g. une aile d'avion) qui contient des tuyauteries de transfert de fluides (e.g. des tuyauteries hydrauliques de carburant, d'huiles ou de fluides d'extinction) est caractérisée en ce qu'une ou plusieurs canalisations de l'une au moins de ces tuyauteries est telle que définie ci-dessus.

Un procédé de fabrication selon l'invention d'une canalisation telle que définie ci-dessus comprend essentiellement les étapes successives suivantes :
A) façonnage de la couche interne thermoplastique ou élastomère thermoplastique (chargée ou non) de préférence par extrusion, avec dépôt optionnel d'au moins une couche intermédiaire sur cette couche interne, pour l'obtention d'une ébauche de géométrie soit rectiligne, soit cintrée et/ou coudée (de préférence tridimensionnelle),
B) chaussage ou drapage *in situ* desdits moyens de renfort directement sur cette ébauche, qui constitue ainsi un noyau fonctionnel de chaussage ou de drapage,
C) consolidation *in situ* de ces moyens de renfort au contact de ce noyau par une matrice thermodurcissable ou thermoplastique avec optionnellement, seulement dans le cas où l'étape B) est mise en oeuvre sur une ébauche de géométrie rectiligne, un moulage par soufflage du noyau rectiligne ramolli par préchauffage suite à cette étape B) pour l'obtention d'une structure multicouches de géométrie cintrée et/ou coudée, puis
D) réticulation et/ou refroidissement de cette structure multicouches, pour l'obtention du tuyau cintré et/ou coudé et à couche de renforcement composite.

En référence à la méthode a) précitée selon l'invention, l'ébauche façonnée à l'étape A), de géométrie initialement rectiligne, est soumise à un formage à chaud pour l'obtention, en vue de l'étape B), d'un noyau destiné au chaussage ou au drapage qui est préalablement cintré et/ou coudé, de géométrie de préférence tridimensionnelle.

On peut mettre en oeuvre ce formage à chaud :
- soit en chauffant localement l'ébauche pour un cintrage avec préchauffage,
- soit en chauffant l'ensemble de l'ébauche à une température prédéterminée permettant son ramollissement et en la soufflant ou en la thermoformant dans un moule sous une très faible pression interne et sans vessie gonflable puisque c'est le tube lui-même ainsi formé qui en tient lieu.

On notera que ce formage à chaud ne nécessite que de très faibles efforts ou pressions, grâce au ramollissement de l'ébauche thermoplastique ou élastomère thermoplastique préalablement chauffée et permet de se passer de tout autre noyau interne.

En référence à l'alternative (i) de la méthode a) précitée, l'on met avantageusement en oeuvre les étapes B) et C) par un drapage des moyens de renfort, tels qu'une ou plusieurs tresses par exemple en carbone, sur le noyau cintré et/ou coudé formé en A) avec :
- soit un drapage à sec des moyens de renfort suivi de leur infusion sous vide à l'étape C) au moyen de ladite matrice thermodurcissable surmoulée à l'état liquide, telle qu'une résine époxy, ce noyau constituant ainsi un noyau fonctionnel de drapage et d'infusion,
- soit l'utilisation pour ce drapage d'un pré-imprégné que l'on consolide au contact du noyau à l'étape C).

Le principe de l'invention consiste ainsi à séparer la réalisation de la couche interne de celle de la couche de renforcement externe et, conformément à cette alternative (i) de la méthode a), à se servir directement de cette couche interne préalablement formée comme noyau de drapage et d'infusion lors de la réalisation du renforcement. D'une manière générale en référence aux méthodes a) et b) de l'invention, le tube fonctionnel interne assure dans les deux cas le rôle de mandrin ou support sur lequel est fabriquée la couche de renforcement. Il assure une résistance chimique et l'étanchéité aux fluides se trouvant à l'intérieur du tuyau, et permet aussi d'ajuster la conductivité électrique interne du tuyau finalement obtenu.

Encore plus avantageusement pour cette alternative (i), l'on choisit de mettre en oeuvre ce drapage à sec suivi de l'infusion, en utilisant une bâche ou sac à vide souple pour cette infusion.

En référence à l'alternative (ii) de la méthode a) selon l'invention, l'on met avantageusement en oeuvre les étapes B) et C) :
- soit par l'enroulement autour du noyau d'un élément composite continu tel qu'un fil ou un ruban qui contient lesdites fibres de renfort entremêlées avec lesdites fibres ou poudres thermoplastiques,
- soit par l'imprégnation desdits moyens de renfort au moyen dudit revêtement polymérique plastique réticulable par voie chimique, de préférence par un moulage de type réaction « RIM » par exemple au moyen d'un polyuréthanne.

En référence à la méthode b) selon l'invention, l'étape B) est directement mise en oeuvre sur une ébauche de géométrie rectiligne obtenue à l'étape A), sans formage à chaud de cette ébauche.

Comme indiqué précédemment, on façonne alors dans un premier temps la couche interne du tuyau selon une géométrie initiale rectiligne (i.e. ni cintrée, ni coudée), ce qui présente l'avantage de réduire le procédé de fabrication du tuyau. Puis on recouvre cette couche interne de la couche de renforcement en un matériau fibreux (par exemple par drapage, « bandelage » ou chaussage d'une préforme ou d'une tresse) entremêlé à l'état de fibres de renforts (e.g. de carbone, de verre ou d'aramide) avec un matériau thermoplastique formé d'autres fibres, d'un film ou encore d'une poudre. On préchauffe la structure ainsi obtenue à sa température de ramollissement et on la place dans un moule (dont l'empreinte présente un diamètre légèrement supérieur à celui de la structure) où on la soumet à un soufflage pour lui conférer la géométrie cintrée et/ou coudée voulue.

On notera que le tube formé par la couche interne ne présente pas dans ces conditions le moindre risque d'effondrement du fait qu'il est en pression, alors que ce risque, même faible, existe avec la méthode a) selon l'invention qui fait appel à une dépression pour l'étape de consolidation.

Quant à l'étape D) de réticulation, elle est mise en oeuvre sous vide dans une étuve, i.e. sans passage requis en autoclave ni autre outillage complexe.

D'une manière générale, on notera que ce procédé selon l'invention permet un ajout aisé :
- de renforts locaux (e.g. tresses, tissus, rubans unidirectionnels, tricots) dans la couche de renforcement sans affecter les outillages de production utilisés,
- d'une couche intermédiaire amortissante de préférence placée entre deux renforts fibreux pour amortir les éventuels modes vibratoires des tuyaux (cf. par exemple l'excitation de « windmilling » ou fonctionnement en moulinet d'avions ayant perdu une pale sur un réacteur), et
- de brides d'extrémités rapportées

Selon une autre caractéristique de l'invention, ce procédé de fabrication peut comprendre en outre la solidarisation à l'étape C) de brides de raccordement du tuyau avec les moyens de renfort, de manière que chaque bride recouvre partiellement ces derniers en une extrémité du tuyau, pour que ces moyens de renfort assurent la continuité mécanique de la canalisation.

Avantageusement, l'on réalise cette solidarisation par le surmoulage de ladite matrice thermodurcissable inhérent à l'infusion dans le cas de l'alternative (i) de la méthode a), en enserrant les moyens de renfort sur leurs deux faces radialement interne et externe par deux collerettes que comporte chaque bride.

L'opération d'infusion peut ainsi également servir à surmouler ces brides d'extrémités directement avec le tuyau, tout en assurant la continuité aux efforts mécaniques avec les moyens de renforts drapés.

Egalement avantageusement, l'on emmanche ou soude par rotation ou ultrasons chaque bride, qui est de préférence alors réalisée en un matériau thermoplastique ou thermoplastique composite, sur la face radialement interne de la couche interne du tuyau.

On notera que les extrémités du noyau interne (i.e. de la couche interne, typiquement) peuvent être au préalable thermoformées afin de faciliter l'assemblage des brides.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec le dessin joint, dans lequel :
la figure 1 est un dessin montrant en perspective une canalisation tridimensionnelle selon l'invention,
la figure 2 est un dessin montrant en perspective une tresse en carbone à l'état déroulé, utilisable comme moyen de renfort dans une couche de renforcement de cette canalisation selon l'invention, et
la figure 3 est une vue schématique partielle en coupe axiale d'une canalisation formée d'un tuyau pourvu de brides de raccordement, selon un exemple de réalisation de l'invention.

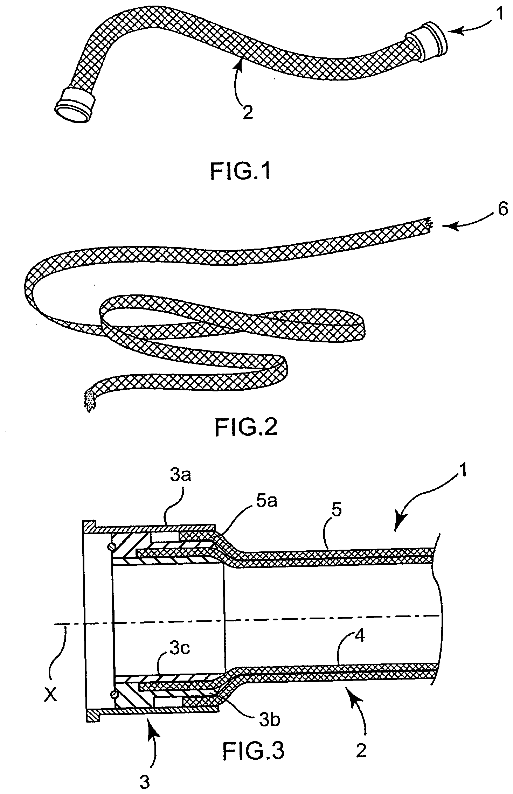

Comme visible à la figure 3, une canalisation 1 selon l'invention, qui comprend un tuyau 2 aux extrémités duquel sont raccordées des brides 3, est telle que le tuyau 2 comprend essentiellement :
- une couche radialement interne 4 réalisée en un matériau thermoplastique ou élastomère thermoplastique (de préférence en polyamide) qui est étanche et chimiquement résistant au fluide transporté (par exemple du carburant), cette couche étant par exemple formée à chaud indépendamment de la couche de renforcement 5 qu'elle est destinée à recevoir dans le cas de la méthode a) selon l'invention, pour conférer au tuyau une géométrie cintrée et/ou coudée, de préférence tridimensionnelle comme visible à la figure 1, et
- la couche de renforcement 5 qui surmonte la couche interne 4 (comme indiqué précédemment, une ou plusieurs couches intermédiaires pourraient être intercalées radialement entre ces couches 4 et 5) et qui est réalisée en un matériau composite à base de moyens de renfort 6 (tels qu'une ou plusieurs tresses en carbone, voir figure 2, de préférence tressée(s) avec un angle d'environ 54° sur au moins une partie de sa longueur pour le maintien en équilibre sous pression de cette couche 5) directement drapés sur cette couche 4.

Plus précisément et toujours dans l'exemple de la méthode a) selon l'invention, ces moyens de renfort 6 sont au choix :
(i) imprégnés d'une matrice thermodurcissable, la couche 5 formant un composite thermodurcissable, ou bien
(ii) soit des fibres de renfort entremêlées avec des fibres ou poudres thermoplastiques, soit imprégnés d'un revêtement polymérique plastique qui est réticulable par voie chimique de préférence via un moulage de type réaction « RIM » par exemple à base d'un polyuréthanne, la couche de renforcement formant un composite thermoplastique.

De préférence, ces moyens de renfort 6 selon la méthode a) sont drapés à sec sur la couche 4 puis infusés sous vide au contact de celle-ci, via une bâche à vide souple, au moyen d'une résine thermodurcissable surmoulée à l'état liquide, comme par exemple une résine époxy, à titre non limitatif. Ainsi, la couche 4 forme un noyau à la fois de drapage et d'infusion pour ces moyens de renfort 6. On réticule ensuite sous vide la structure obtenue dans une étuve.

Comme illustré à la figure 3, on peut avantageusement solidariser, pendant l'opération de consolidation par infusion de la couche 5, les brides de raccordement 3 du tuyau 2 avec les moyens de renfort 6 drapés (e.g. la ou les tresses), de manière que chaque bride recouvre partiellement les moyens de renfort 6 en une extrémité 5a de la couche 5 en étant étroitement liée à ces derniers. Selon l'invention, on réalise cette solidarisation par le surmoulage de la résine thermodurcissable liquide utilisée lors de l'infusion, en enserrant l'extrémité 5a des moyens de renforts 6 par deux collerettes 3a et 3b radialement externe et interne que comporte chaque bride 3.

On peut en outre emmancher ou souder par rotation (i.e. par friction) chaque bride 3, dans le cas préférentiel où elle est réalisée en un matériau thermoplastique ou thermoplastique composite), sur la face radialement interne de la couche interne 4 du tuyau 2, via une portion interne 3c de cette bride 3.

De cette manière, les moyens de renfort 6 ainsi consolidés par la résine assurent, après réticulation de celle-ci, la continuité mécanique de la canalisation 1 vis-à-vis des efforts dont elle est le siège en utilisation.

Comme expliqué précédemment en référence à la méthode b) selon l'invention, il est également possible de recouvrir directement la couche interne 4, dans sa géométrie initiale rectiligne, de la couche de renforcement 5 où les moyens de renfort 6 sont des fibres de renfort entremêlées avec un matériau thermoplastique (indifféremment sous forme de fibres, de films ou de poudre), puis de donner sa géométrie finale cintrée et/ou coudée à la structure préalablement ramollie par une technique de soufflage dans un moule adapté.

## Revendications

1. Canalisation (1) utilisable pour une tuyauterie de carburant de véhicule aérien ou spatial, la canalisation comportant au moins un tuyau multicouches (2) comprenant une couche radialement interne (4) qui est réalisée en un matériau thermoplastique à base d'au moins un polymère thermoplastique choisi dans le groupe constitué par les polyamides (PA), les polyétherimides (PEI), les polysulfures de phénylène (PPS), les polyétheréthercétones (PEEK), les polyéthercétonecétones (PEKK) et leurs mélanges ou en un élastomère thermoplastique et qui est étanche et chimiquement résistante au carburant transporté, et au moins une couche de renforcement (5) située radialement au dessus de la couche interne, **caractérisée en ce que** le tuyau présente une géométrie cintrée et/ou coudée, de préférence tridimensionnelle, et **en ce que** la couche de renforcement est réalisée en un matériau composite à base de moyens de renfort (6) qui sont en contact intime et direct avec la couche sous-jacente, telle que la couche interne, ladite géométrie étant obtenue suivant l'une ou l'autre des deux méthodes a) et b) suivantes :
a) la couche interne est préalablement formée à chaud indépendamment de la couche de renforcement pour la faire passer d'une géométrie initiale rectiligne à cette géométrie cintrée et/ou coudée, lesdits moyens de renfort étant au choix :
(i) à base d'au moins une tresse cylindrique fibreuse imprégnée d'une matrice thermodurcissable, la couche de renforcement formant un composite thermodurcissable à matrice thermodurcissable de température de réticulation inférieure à la température de fusion de ladite couche sous-jacente, ou
(ii) soit des fibres de renfort entremêlées avec des fibres ou poudres thermoplastiques, soit imprégnés d'un revêtement polymérique plastique qui est réticulable par voie chimique, la couche de renforcement formant dans ces deux cas un composite thermoplastique à matrice thermoplastique de température de transformation inférieure à celle de ladite couche sous-jacente ; ou bien
b) la couche interne, dans sa géométrie initiale rectiligne, est préalablement recouverte de la couche de renforcement dans laquelle lesdits moyens de renfort sont des fibres de renfort entremêlées avec un matériau thermoplastique sous forme de fibres, d'un film ou de poudre, puis cette couche interne ainsi recouverte et ramollie est moulée par soufflage pour conférer au tuyau sa géométrie cintrée et/ou coudée, la couche de renforcement obtenue formant un composite à matrice thermoplastique.

2. Canalisation (1) selon la revendication 1, **caractérisée en ce que** lesdits moyens de renfort (6) selon les cas a) (ii) et b) sont de type fibreux, étant choisis dans le groupe constitué par une ou plusieurs tresses, un ou plusieurs tricots, un ou plusieurs plis de tissu, des rubans unidirectionnels, des complexes de type à âme non tissée de part et d'autre de laquelle sont cousus ou tricotés des mats ou tissus, des complexes à base de fibres de renfort thermodurcies et des combinaisons de ces moyens de renfort par exemple avec un matériau amortissant, tel qu'un élastomère.

3. Canalisation (1) selon la revendication 1 ou 2, **caractérisée en ce que** lesdits moyens de renfort (6) comprennent lesdites tresses cylindriques optionnellement séparées entre elles par des couches amortissant les vibrations, la ou chaque tresse étant de préférence réalisée en carbone, l'angle de tressage que fait la ou chaque tresse (6) avec l'axe de symétrie (X) du tuyau (2) étant de préférence sensiblement égal à 54° sur au moins une portion du tuyau, de sorte à éviter le fluage en température de la couche sous-jacente, telle que la couche interne (4), ou de la matrice thermoplastique de la couche de renforcement, et à maintenir cette tresse en équilibre sur ces couches lorsqu'elles sont mises sous pression.

4. Canalisation (1) selon une des revendications précédentes, **caractérisée en ce que** la couche interne (4) est à base d'au moins un polyamide qui est choisi dans le groupe constitué par les PA6, PA6.6, PA11, PA12 et leurs mélanges, et qui présente une température de transition vitreuse Tg réduite et par exemple voisine de 45° C, un angle de tressage sensiblement égal à 54° évitant le fluage à des températures d'utilisation supérieures de cette couche interne.

5. Canalisation (1) selon la revendication 3, **caractérisée en ce que** la couche interne (4) est à base d'au moins un élastomère thermoplastique, de préférence un alliage de vulcanisats thermoplastiques (TPV).

6. Canalisation (1) selon une des revendications précédentes, **caractérisée en ce que** lesdits moyens de renfort (6) de la couche de renforcement (5) sont directement drapés ou chaussés sur la couche interne (4), laquelle forme un noyau de drapage fonctionnel.

7. Canalisation (1) selon une des revendications 1 à 5, **caractérisée en ce que** ledit tuyau (2) comprend, radialement entre la couche interne (4) et la couche de renforcement (5) adjacente, au moins une couche intermédiaire de conductivité électrique par exemple prévue pour réduire la conductivité électrique globale du tuyau vis-à-vis de risques de foudroiement et d'explosion du fluide transporté, lesdits moyens de renfort de la couche de renforcement étant directement drapés sur la couche intermédiaire sous-jacente.

8. Canalisation (1) selon une des revendications précédentes, **caractérisée en ce que** la couche de renforcement (5) et lesdits moyens de renfort (6) qui y sont inclus sont tels que définis à l'alternative (i) de la méthode a), ces derniers étant directement drapés ou chaussés sur la couche sous-jacente, telle que la couche interne (4).

9. Canalisation (1) selon la revendication 8, **caractérisée en ce que** lesdits moyens de renfort (6) sont drapés à sec et infusés sous vide au moyen de ladite matrice thermodurcissable surmoulée à l'état liquide, et **en ce que** de préférence la couche interne (4) est à base d'au moins un polyamide choisi dans le groupe constitué par les PA6, PA6.6, PA11, PA12 et leurs mélanges, cette couche interne présentant une épaisseur minimisée en relation avec la dépression utilisée pour cette infusion sous vide.

10. Canalisation (1) selon la revendication 9, **caractérisée en ce que** lesdits moyens de renfort (6) sont infusés sous vide au moyen d'une résine liquide thermodurcissable choisie dans le groupe constitué par les résines époxy, bismaléimides (BMI), phénoliques, polyesters, vinylesters, polyétherimide (PEI) et leurs mélanges, et **en ce que** de préférence la couche de renforcement (5) forme un composite thermodurcissable résine époxy/ carbone ou époxy/aramide ou époxy/verre, étant de préférence formé d'une ou plusieurs tresses (6) en carbone infusées avec une résine époxy.

11. Canalisation (1) selon la revendication 6 et selon la revendication 9 ou 10, **caractérisée en ce que** la couche interne (4) forme un noyau à la fois de drapage et d'infusion pour lesdits moyens de renfort (6).

12. Canalisation (1) selon la revendication 8, **caractérisée en ce que** lesdits moyens de renfort (6) sont pré-imprégnés par ladite matrice thermodurcissable, consolidés au contact de la couche sous-jacente (4) du tuyau (2) puis réticulés.

13. Canalisation (1) selon une des revendications 1 à 7, **caractérisée en ce que** la couche de renforcement (5) et lesdits moyens de renfort (6) qui y sont inclus sont tels que définis à l'alternative (ii) de la méthode a), cette couche de renforcement étant formée :
- soit d'un élément composite continu tel qu'un ruban qui contient lesdites fibres de renfort entremêlées avec lesdites fibres ou poudres thermoplastiques et qui est enroulé autour de la couche interne (4),
- soit d'une ou plusieurs tresses imprégnées par ledit revêtement polymérique plastique réticulable par voie chimique, de préférence par un moulage de type réaction « RIM » par exemple à base d'un polyuréthanne.

14. Canalisation (1) selon une des revendications 1 à 7, **caractérisée en ce que** ledit tuyau (2) est obtenu par la méthode b), lesdites fibres de renfort (6), telles que des fibres de carbone, de verre ou d'aramide, étant entremêlées avec ledit matériau thermoplastique pour former la couche de renforcement (5) qui est drapée ou chaussée sur la couche sous-jacente, telle que la couche interne (4), la matrice thermoplastique de cette couche de renforcement pouvant alors présenter une température de transformation voisine de celle de cette couche sous-jacente.

15. Canalisation (1) selon une des revendications précédentes, **caractérisée en ce qu'**elle incorpore des brides de raccordement (3) du tuyau (2) au reste de la tuyauterie, chaque bride étant réalisée en un matériau métallique, thermoplastique ou thermoplastique composite et étant solidaire desdits moyens de renfort (6) en recouvrant partiellement ces derniers en une extrémité (5a) du tuyau, de telle sorte que ces moyens de renfort assurent la continuité mécanique de la canalisation.

16. Canalisation (1) selon une des revendications 9 à 11 et selon la revendication 15, **caractérisée en ce que** lesdits moyens de renforts (6) sont enserrés sur leurs deux faces radialement interne et externe par deux collerettes (3a et 3b) que comporte chaque bride (3), et sont solidarisés avec ces collerettes lors de l'infusion par ladite matrice thermodurcissable surmoulée sur ces moyens de renfort.

17. Canalisation (1) selon la revendication 15 ou 16, **caractérisée en ce que** chaque bride (3) est réalisée en un matériau thermoplastique ou thermoplastique composite et est emmanchée ou soudée par rotation ou ultrasons sur la face radialement interne de la couche interne (4) du tuyau (2), et **en ce que** de préférence chaque bride (3) contient des inserts électriquement conducteurs par exemple métalliques ou de type tresse(s) conductrice(s), sur lesquels elle est surmoulée, de sorte à obtenir une conductivité électrique déterminée pour la canalisation ou à pouvoir la connecter électriquement aux structures avoisinantes.

18. Canalisation (1) selon une des revendications précédentes, **caractérisée en ce que** ledit tuyau (2) comprend une gaine externe définissant sa surface radialement extérieure, cette gaine étant par exemple destinée à améliorer les propriétés physiques et la résistance chimique du tuyau et/ou à amortir les vibrations reçues et/ou à assurer une isolation électrique et/ou thermique et/ou à améliorer la tenue aux impacts du tuyau.

19. Structure aéronautique contenant des tuyauteries de transfert de fluides, **caractérisée en ce qu'**une ou plusieurs canalisations (1) de l'une au moins de ces tuyauteries est telle que définie à l'une des revendications précédentes.

20. Procédé de fabrication d'une canalisation (1) selon une des revendications 1 à 18, **caractérisé en ce qu'**il comprend essentiellement les étapes successives suivantes :
A) façonnage de la couche interne (4) thermoplastique ou élastomère thermoplastique de préférence par extrusion, avec dépôt optionnel d'au moins une couche intermédiaire sur cette couche interne, pour l'obtention d'une ébauche de géométrie soit rectiligne, soit cintrée et/ou coudée,
B) chaussage ou drapage *in situ* desdits moyens de renfort (6) directement sur cette ébauche, qui constitue ainsi un noyau fonctionnel de chaussage ou de drapage,
C) consolidation *in situ* de ces moyens de renfort au contact de ce noyau par une matrice thermodurcissable ou thermoplastique avec optionnellement, seulement dans le cas où l'étape B) est mise en oeuvre sur une ébauche de géométrie rectiligne, un moulage par soufflage du noyau rectiligne ramolli par préchauffage suite à cette étape B) pour l'obtention d'une structure multicouches de géométrie cintrée et/ou coudée, puis
D) réticulation et/ou refroidissement de cette structure multicouches, pour l'obtention du tuyau (2) cintré et/ou coudé et à couche de renforcement (5) composite, cette réticulation étant par exemple réalisée sous vide dans une étuve.

21. Procédé selon la revendication 20, **caractérisé en ce que** l'ébauche façonnée à l'étape A), de géométrie initialement rectiligne, est soumise à un formage à chaud pour l'obtention, en vue de l'étape B), d'un noyau (4) de chaussage ou de drapage qui est préalablement cintré et/ou coudé et de géométrie de préférence tridimensionnelle, et **en ce que** de préférence l'on met en oeuvre ce formage à chaud :
- soit en chauffant localement l'ébauche pour un cintrage avec préchauffage,
- soit en chauffant l'ensemble de l'ébauche à une température prédéterminée permettant son ramollissement et en la soufflant ou thermoformant dans un moule sous une pression interne, sans aucune vessie gonflable.

22. Procédé selon la revendication 21, **caractérisé en ce que** l'on met en oeuvre les étapes B) et C), conformément à l'alternative (i), par un drapage desdits moyens de renfort (6), tels qu'une ou plusieurs tresses par exemple en carbone, sur le noyau (4) cintré et/ou coudé formé en A) avec :
- soit un drapage à sec desdits moyens de renfort à l'étape B) suivi de leur infusion sous vide à l'étape C) au moyen de ladite matrice thermodurcissable surmoulée à l'état liquide, telle qu'une résine époxy, ce noyau constituant ainsi un noyau fonctionnel de drapage et d'infusion,
- soit l'utilisation pour ce drapage d'un pré-imprégné que l'on consolide au contact du noyau à l'étape C) ;
et **en ce que** de préférence l'on met en oeuvre ce drapage à sec suivi de cette infusion en utilisant une bâche ou sac à vide souple.

23. Procédé selon la revendication 21, **caractérisé en ce que** l'on met en oeuvre les étapes B) et C), conformément à l'alternative (ii) :
- soit par l'enroulement autour du noyau (4) d'un élément composite continu tel qu'un ruban qui contient lesdites fibres de renfort entremêlées avec lesdites fibres ou poudres thermoplastiques,
- soit par l'imprégnation desdits moyens de renfort (6) au moyen dudit revêtement polymérique plastique réticulable par voie chimique, de préférence par un moulage de type réaction « RIM » par exemple au moyen d'un polyuréthanne.

24. Procédé selon la revendication 20, **caractérisé en ce que** l'étape B) est directement mise en oeuvre sur une ébauche de géométrie rectiligne obtenue à l'étape A), sans formage à chaud de cette ébauche.

25. Procédé selon une des revendications 21 à 23, **caractérisé en ce qu'**il comprend en outre la solidarisation à l'étape C) de brides (3) de raccordement du tuyau (2) avec lesdits moyens de renfort (6), de manière que chaque bride recouvre partiellement ces derniers en une extrémité (5a) du tuyau, pour que ces moyens de renfort assurent la continuité mécanique de la canalisation.

26. Procédé selon les revendications 22 et 25, **caractérisé en ce que** l'on réalise cette solidarisation par le surmoulage de ladite matrice thermodurcissable inhérent à l'infusion, en enserrant lesdits moyens de renfort (6) sur leurs deux faces radialement interne et externe par deux collerettes (3a et 3b) que comporte chaque bride (3).

27. Procédé selon la revendication 25 ou 26, **caractérisé en ce que** l'on emmanche ou soude par rotation ou ultrasons chaque bride (3), qui est de préférence réalisée en un matériau thermoplastique ou thermoplastique composite, sur la face radialement interne de la couche interne (4) du tuyau (2).

## Patentansprüche

1. Kanalisation (1), die für eine Kraftstoffrohrleitung eines Luft- oder Raumfahrzeugs verwendbar ist, wobei die Kanalisation mindestens ein mehrschichtiges Rohr (2) beinhaltet, das eine radial interne Schicht (4) umfasst, die aus einem thermoplastischen Material auf der Basis mindestens eines thermoplastischen Polymers, das aus der Gruppe ausgewählt ist, die aus den Polyamiden (PA), den Polyetherimiden (PEI), den Phenylenpolysulfiden (PPS), den Polyetheretherketonen (PEEK), den Polyetherketonketonen (PEKK) und ihren Gemischen besteht, oder aus einem thermoplastischen Elastomer hergestellt ist, und die gegenüber dem transportierten Kraftstoff dicht und chemisch beständig ist, und mindestens eine Verstärkungsschicht (5), die radial oberhalb der internen Schicht liegt, **dadurch gekennzeichnet, dass** das Rohr eine, bevorzugt dreidimensionale, gebogene und/oder abgewinkelte Geometrie aufweist, und dadurch, dass die Verstärkungsschicht aus einem Verbundmaterial auf der Basis von Versteifungsmitteln (6) hergestellt ist, die in engem und direktem Kontakt mit der darunterliegenden Schicht, wie der internen Schicht, stehen, wobei die Geometrie gemäß der einen oder der anderen der beiden folgenden Methoden a) und b) erhalten wird:
a) die interne Schicht wird vorab unabhängig von der Verstärkungsschicht warmgeformt, um sie von einer anfänglichen geradlinigen Geometrie zu dieser gebogenen und/oder abgewinkelten Geometrie übergehen zu lassen, wobei die Versteifungsmittel wahlweise sind:
(i) auf Basis mindestens eines faserigen zylindrischen Geflechts, das mit einer wärmehärtbaren Matrix imprägniert ist, wobei die Verstärkungsschicht einen wärmehärtbaren Verbund mit wärmehärtbarer Matrix mit Vernetzungstemperatur kleiner als die Schmelztemperatur der darunterliegenden Schicht bildet, oder
(ii) entweder Versteifungsfasern, die mit thermoplastischen Fasern oder thermoplastischen Pulvern vermischt sind, oder mit einer plastischen Polymerbeschichtung imprägniert sind, die auf chemischem Weg vernetzbar ist, wobei die Verstärkungsschicht in diesen beiden Fällen einen thermoplastischen Verbund mit thermoplastischer Matrix mit Umwandlungstemperatur niedriger als die der darunterliegenden Schicht bildet; oder aber
b) die interne Schicht in ihrer anfänglichen geradlinigen Geometrie vorab mit der Verstärkungsschicht, in der die Versteifungsmittel Versteifungsfasern sind, die mit einem thermoplastischen Material in Form von Fasern gemischt sind, einer Folie oder einem Pulver abgedeckt wird, diese derart abgedeckte und erweichte interne Schicht dann durch Blasen geformt wird, um dem Rohr seine gebogene und/oder abgewinkelte Geometrie zu verleihen, wobei die erhaltene Verstärkungsschicht einen Verbund mit thermoplastischer Matrix bildet.

2. Kanalisation (1) nach Anspruch 1, **dadurch gekennzeichnet, dass**, die Versteifungsmittel (6) gemäß den Fällen a) (ii) und b) vom faserigen Typ sind, die aus der Gruppe ausgewählt sind, die aus einem oder mehreren Geflechten, einem oder mehreren Strickgeweben, einer oder mehreren Stofffalten, unidirektionalen Bändern, Komplexen vom Typ mit Vlieseinlage, an deren beiden Seiten Matten oder Stoffe genäht oder gestrickt sind, Komplexen auf der Basis wärmegehärteter Versteifungsfasern und Kombinationen dieser Versteifungsmittel, zum Beispiel mit einem dämpfenden Material, wie einem Elastomer, besteht.

3. Kanalisation (1) nach Anspruch 1 oder 2, **dadurch gekennzeichnet, dass** die Versteifungsmittel (6) die zylindrischen Geflechte umfassen, die optional voneinander durch Schichten, die die Schwingungen dämpfen, getrennt sind, wobei das oder jedes Geflecht bevorzugt aus Carbon hergestellt ist, wobei der Flechtwinkel, den das oder jedes Geflecht (6) mit der Symmetrieachse (X) des Rohrs (2) bildet, bevorzugt im Wesentlichen gleich 54° auf mindestens einem Abschnitt des Rohrs ist, so dass das Temperaturkriechen der darunterliegenden Schicht, wie der internen Schicht (4) oder der thermoplastischen Matrix der Verstärkungsschicht verhindert wird, und dieses Geflecht im Gleichgewicht auf diesen Schichten gehalten wird, wenn sie mit Druck beaufschlagt werden.

4. Kanalisation (1) nach einem der vorstehenden Ansprüche, **dadurch gekennzeichnet, dass** die interne Schicht (4) auf mindestens einem Polyamid basiert, das aus der Gruppe ausgewählt ist, die aus den PA6, PA6.6, PA11, PA12 und ihren Gemischen besteht, und die eine reduzierte Glasübergangstemperatur Tg und zum Beispiel nahe 45 °C, einen Flechtwinkel im Wesentlichen gleich 54° aufweist, der das Kriechen dieser internen Schicht bei höheren Verwendungstemperaturen verhindert.

5. Kanalisation (1) nach Anspruch 3, **dadurch gekennzeichnet, dass** die interne Schicht (4) auf mindestens einem thermoplastischen Elastomer, bevorzugt auf einer Legierung thermoplastischer Vulkanisate (TPV), basiert.

6. Kanalisation (1) nach einem der vorstehenden Ansprüche, **dadurch gekennzeichnet, dass** die Versteifungsmittel (6) der Verstärkungsschicht (5) direkt auf der internen Schicht (4), die einen funktionalen Drapierkern bildet, drapiert oder aufgezogen sind.

7. Kanalisation (1) nach einem der Ansprüche 1 bis 5, **dadurch gekennzeichnet, dass** das Rohr (2) radial zwischen der internen Schicht (4) und der angrenzenden Verstärkungsschicht (5) mindestens eine Zwischenschicht mit elektrischer Leitfähigkeit umfasst, die zum Beispiel vorgesehen ist, um die globale elektrische Leitfähigkeit des Rohrs gegenüber Blitzschlag- und Explosionsgefahren des transportierten Fluids zu reduzieren, wobei die Versteifungsmittel der Verstärkungsschicht direkt auf der darunterliegenden Zwischenschicht drapiert sind.

8. Kanalisation (1) nach einem der vorstehenden Ansprüche, **dadurch gekennzeichnet, dass** die Verstärkungsschicht (5) und die Versteifungsmittel (6), die darin eingeschlossen sind, wie bei der Alternative (i) der Methode a) definiert sind, wobei diese Letzteren direkt auf der darunterliegenden Schicht, wie der internen Schicht (4), drapiert oder aufgezogen sind.

9. Kanalisation (1) nach Anspruch 8, **dadurch gekennzeichnet, dass** die Versteifungsmittel (6) trocken drapiert, und unter Vakuum mittels der im flüssigen Zustand umspritzten wärmehärtbaren Matrix infundiert werden, und dadurch, dass die interne Schicht (4) bevorzugt auf mindestens einem Polyamid basiert, das aus der Gruppe ausgewählt ist, die aus den PA6, PA6.6, PA11, PA12 und ihren Gemischen besteht, wobei diese interne Schicht eine Stärke aufweist, die in Bezug auf den Unterdruck, der für diese Infusion unter Vakuum verwendet wird, minimiert ist.

10. Kanalisation (1) nach Anspruch 9, **dadurch gekennzeichnet, dass** die Versteifungsmittel (6) unter Vakuum mittels eines wärmehärtbaren flüssigen Harzes infundiert werden, das aus der Gruppe ausgewählt ist, die aus den Epoxidharzen, Bismaleimiden (BMI), Phenolharzen, Polyestern, Vinylestern, Polyetherimid (PEI) und deren Gemischen besteht, und dadurch, dass die Verstärkungsschicht (5) bevorzugt einen wärmehärtbaren Verbund aus Epoxidharz/Carbon oder Epoxid/Aramid oder Epoxid/Glas bildet, wobei es bevorzugt aus einem oder mehreren Carbongeflechten (6), die mit einem Epoxidharz infundiert sind, gebildet wird.

11. Kanalisation (1) nach Anspruch 6 und nach Anspruch 9 oder 10, **dadurch gekennzeichnet, dass** die interne Schicht (4) sowohl einen Drapier- als auch Infusionskern für die Versteifungsmittel (6) bildet.

12. Kanalisation (1) nach Anspruch 8, **dadurch gekennzeichnet, dass** die Versteifungsmittel (6) vorab mit der wärmehärtbaren Matrix imprägniert, in Kontakt mit der darunterliegenden Schicht (4) des Rohrs (2) konsolidiert und dann vernetzt werden.

13. Kanalisation (1) nach einem der Ansprüche 1 bis 7, **dadurch gekennzeichnet, dass** die Verstärkungsschicht (5) und die Versteifungsmittel (6), die darin eingeschlossen sind, wie bei der Alternative (ii) der Methode a) definiert sind, wobei diese Verstärkungsschicht gebildet ist aus:
- entweder einem kontinuierlichen Verbundelement, wie einem Band, das die Versteifungsfasern enthält, die mit den thermoplastischen Fasern oder Pulvern vermischt sind, und das um die interne Schicht (4) gewickelt ist,
- oder einem oder mehreren Geflechten, die durch die auf chemischem Weg vernetzbare, plastische Polymerbeschichtung imprägniert sind, bevorzugt durch einen Formguss vom Typ "RIM"-Reaktion, zum Beispiel auf der Basis eines Polyurethans.

14. Kanalisation (1) nach einem der Ansprüche 1 bis 7, **dadurch gekennzeichnet, dass** das Rohr (2) durch die Methode b) erhalten wird, wobei die Versteifungsfasern (6), wie Carbon-, Glas- oder Aramidfasern, die mit dem thermoplastischen Material vermischt sind, um die Verstärkungsschicht (5), die auf der darunterliegenden Schicht, wie der internen Schicht (4), drapiert oder aufgezogen ist, zu bilden, wobei die thermoplastische Matrix dieser Verstärkungsschicht daher eine Umwandlungstemperatur nahe der dieser darunterliegenden Schicht aufweisen kann.

15. Kanalisation (1) nach einem der vorstehenden Ansprüche, **dadurch gekennzeichnet, dass** sie Flansche (3) zum Anschließen des Rohrs (2) an den Rest der Rohrleitung einbezieht, wobei jeder Flansch aus einem metallischen, Thermoplast- oder thermoplastischen Verbundmaterial hergestellt ist und fest mit den Versteifungsmitteln (6) verbunden ist, indem sie diese Letzteren an einem Ende (5a) des Rohrs teilweise derart abdecken, dass diese Versteifungsmittel für die mechanische Kontinuität der Kanalisation sorgen.

16. Kanalisation (1) nach einem der Ansprüche 9 bis 11 und nach Anspruch 15, **dadurch gekennzeichnet, dass** die Versteifungsmittel (6) auf ihren beiden radial internen und externen Flächen durch zwei Bünde (3a und 3b), die jeder Flansch (3) beinhaltet, eingespannt sind und bei der Infusion durch die auf diesen Versteifungsmitteln umspritzte wärmehärtbare Matrix fest mit den Bünden verbunden sind.

17. Kanalisation (1) nach Anspruch 15 oder 16, **dadurch gekennzeichnet, dass** jeder Flansch (3) aus einem Thermoplast- oder thermoplastischen Verbundmaterial hergestellt ist, und durch Drehen oder Ultraschall auf der radial internen Fläche der internen Schicht (4) des Rohrs (2) aufgepresst oder geschweißt ist, und dadurch, dass jeder Flansch (3) bevorzugt elektrisch leitende, zum Beispiel metallische Einsätze oder vom Typ (eines) leitender Geflechte(s) enthält, auf welchen er umspritzt wird, so dass eine bestimmte elektrische Leitfähigkeit für die Kanalisation erhalten wird oder sie elektrisch mit benachbarten Strukturen verbunden werden kann.

18. Kanalisation (1) nach einem der vorstehenden Ansprüche, **dadurch gekennzeichnet, dass** das Rohr (2) eine externe Hülle umfasst, die seine radial externe Oberfläche definiert, wobei diese Hülle zum Beispiel dazu bestimmt ist, die physikalischen Eigenschaften und die chemische Beständigkeit des Rohrs zu verbessern und/oder die empfangenen Schwingungen zu dämpfen und/oder für eine elektrische Isolation und/oder Wärmeisolation zu sorgen und/oder die Beständigkeit gegenüber Stößen des Rohrs zu verbessern.

19. Luftfahrtstruktur, die Fluidtransferrohrleitungen enthält, **dadurch gekennzeichnet, dass** eine oder mehrere Kanalisationen (1) von mindestens einer dieser Rohrleitungen wie in einem der vorstehenden Ansprüche definiert, beschaffen sind.

20. Verfahren zur Fertigung einer Kanalisation (1) nach einem der Ansprüche 1 bis 18, **dadurch gekennzeichnet, dass** es im Wesentlichen die folgenden aufeinanderfolgenden Schritte umfasst:
A) Gestalten der internen Schicht (4) aus Thermoplast oder thermoplastischem Elastomer, bevorzugt durch Extrusion mit optionaler Abscheidung mindestens einer Zwischenschicht auf dieser internen Schicht, zum Erhalten eines Rohlings mit entweder geradliniger oder gebogener und/oder abgewinkelter Geometrie,
B) Aufziehen oder Drapieren *in situ* der Versteifungsmittel (6) direkt auf diesen Rohling, der daher einen funktionalen Kern zum Aufziehen oder Drapieren bildet,
C) Konsolidieren *in situ* dieser Versteifungsmittel beim Kontakt mit diesem Kern durch eine wärmehärtbare oder thermoplastische Matrix mit optional, nur in dem Fall, in dem der Schritt B) auf einem Rohling mit geradliniger Geometrie umgesetzt wird, einem Formguss durch Blasen des geradlinigen Kerns, der durch Vorheizen erweicht ist, im Anschluss an diesen Schritt B), zum Erhalten einer mehrschichtigen Struktur mit gebogener und/oder abgewinkelter Geometrie, dann
D) Vernetzen und/oder Abkühlen dieser mehrschichtigen Struktur, um das gebogene und/oder abgewinkelte Rohr (2) und mit Verbundmaterial-Verstärkungsschicht (5) zu erhalten, wobei diese Vernetzung zum Beispiel unter Vakuum in einem Wärmeschrank ausgeführt wird.

21. Verfahren nach Anspruch 20, **dadurch gekennzeichnet, dass** der im Schritt A) gestaltete Rohling mit anfänglich geradliniger Geometrie einem Warmformen unterzogen wird, um in Hinblick auf den Schritt B) einen Kern (4) zum Aufziehen oder Drapieren zu erhalten, der vorab gebogen und/oder abgewinkelt wird, und mit bevorzugt dreidimensionaler Geometrie, und dadurch, dass dieses Warmformen umgesetzt wird:
- entweder durch lokales Erhitzen des Rohlings für ein Biegen mit Vorheizen,
- oder durch Erhitzen des gesamten Rohlings auf eine vorbestimmte Temperatur, die sein Erweichen erlaubt, und durch sein Blasen oder Wärmeformen in einer Form unter einem internen Druck, ohne Blasbalg.

22. Verfahren nach Anspruch 21, **dadurch gekennzeichnet, dass** die Schritte B) und C) gemäß der Alternative (i) durch ein Drapieren der Versteifungsmittel (6), wie einem oder mehreren Geflechten, zum Beispiel aus Carbon auf dem gebogenen und/oder abgewinkelten Kern (4), der bei A) gebildet wird, umgesetzt werden, mit:
- entweder einem trockenen Drapieren der Versteifungsmittel in dem Schritt B), gefolgt von ihrer Infusion unter Vakuum in dem Schritt C) mittels der wärmehärtbaren Matrix, die im flüssigen Zustand umspritzt wird, wie einem Epoxidharz, wobei dieser Kern somit einen funktionalen Drapier- und Infusionskern bildet,
- oder der Verwendung für dieses Drapieren eines Vorimprägnats, das bei Berührung mit dem Kern in dem Schritt C) konsolidiert wird;
und dadurch, dass dieses Drapieren bevorzugt trocken umgesetzt wird, gefolgt von dieser Infusion, indem eine Plane oder ein flexibler Vakuumbeutel verwendet wird.

23. Verfahren nach Anspruch 21, **dadurch gekennzeichnet, dass** die Schritte B) und C) gemäß der Alternative (ii) umgesetzt werden:
- entweder durch Wickeln eines kontinuierlichen Verbundelements, wie eines Bandes, das die Versteifungsfasern, die mit den thermoplastischen Fasern oder thermoplastischen Pulvern gemischt sind, enthält, um den Kern (4),
- oder durch Imprägnieren der Versteifungsmittel (6) mittels der auf chemischem Weg vernetzbaren, plastischen Polymerbeschichtung, bevorzugt durch einen Formguss vom Typ "RIM"-Reaktion, zum Beispiel mittels eines Polyurethans.

24. Verfahren nach Anspruch 20, **dadurch gekennzeichnet, dass** der Schritt B) direkt auf einem Rohling mit geradliniger Geometrie, der in dem Schritt A) erhalten wird, ohne Warmformen dieses Rohlings umgesetzt wird.

25. Verfahren nach einem der Ansprüche 21 bis 23, **dadurch gekennzeichnet, dass** es weiter die feste Verbindung in dem Schritt C) von Flanschen (3) zum Anschließen des Rohrs (2) an die Versteifungsmittel (6) derart umfasst, dass jeder Flansch teilweise diese Letzteren an einem Ende (5a) des Rohrs abdeckt, damit diese Versteifungsmittel für die mechanische Kontinuität der Kanalisation sorgen.

26. Verfahren nach den Ansprüchen 22 und 25, **dadurch gekennzeichnet, dass** diese feste Verbindung durch Umspritzen der wärmehärtbaren Matrix, die der Infusion inhärent ist, ausgeführt wird, indem die Versteifungsmittel (6) auf ihren beiden radial internen und externen Flächen durch zwei Bünde (3a und 3b), die jeder Flansch (3) beinhaltet, eingespannt werden.

27. Verfahren nach Anspruch 25 oder 26, **dadurch gekennzeichnet, dass** jeder Flansch (3), der bevorzugt aus einem thermoplastischen Material oder einem thermoplastischen Verbund hergestellt ist, auf der radial internen Fläche der internen Schicht (4) des Rohrs (2) durch Drehen aufgepresst oder durch Ultraschall geschweißt wird.

## Claims

1. Conduit (1) which can be used for an air or space vehicle fuel pipeline, the conduit comprising at least one multilayer pipe (2) comprising a radially internal layer (4) which is made of a thermoplastic material based on at least one thermoplastic polymer selected from the group consisting of polyamides (PA), polyetherimides (PEI), phenylene polysulphides (PPS), polyetheretherketones (PEEK), polyetherketoneketones (PEKK) and mixtures thereof or made of a thermoplastic elastomer and which is sealed and chemically resistant to the fuel transported, and at least one reinforcing layer (5) located radially above the internal layer, **characterised in that** the pipe has a curved and/or bent geometry, preferably three-dimensional, and **in that** the reinforcing layer is made of a composite material based on reinforcing means (6) which are in close and direct contact with the underlying layer, such as the internal layer, said geometry being obtained according to one or other of the two following methods a) and b):
a) the internal layer is hot-formed beforehand independently from the reinforcing layer to make it pass from an initial rectilinear geometry to this curved and/or bent geometry, said reinforcing means being selected from:
i) based on at least one fibrous cylindrical braid impregnated with a thermosetting matrix, the reinforcing layer, forming a thermosetting composite with a thermosetting matrix of a cross-linking temperature less than the melting temperature of said underlying layer, or
ii) reinforcing fibres intermixed with thermoplastic fibres or powders which are impregnated with a plastic polymeric coating which can be cross-linked chemically, the reinforcing layer forming, in these two cases, a thermoplastic composite with a thermoplastic matrix of transformation temperature less than that of said underlying layer; or
b) the internal layer, in the initial rectilinear geometry thereof, is covered beforehand with the reinforcing layer wherein said reinforcing means are reinforcing fibres intermixed with a thermoplastic material in the form of fibres, of a film or powder, then this internal layer thus covered and softened is blast-moulded to confer the curved and/or bent geometry thereof to the pipe, the reinforcing layer obtained forming a thermoplastic matrix composite.

2. Conduit (1) according to claim 1, **characterised in that** said reinforcing means (6) according to cases a) (ii) and b) are of a fibrous type, being selected from the group consisting of one or more braids, one or more knits, or one or more material folds, one-directional strips, complexes of the non-woven core type on either side of which mats or materials are sewn or knitted, thermoset reinforcing fibre-based complexes and combinations of these reinforcing means, for example, with a damping material, such as an elastomer.

3. Conduit (1) according to claim 1 or 2, **characterised in that** said reinforcing means (6) comprise said cylindrical braids optionally separated from one another by vibration damping layers, the or each braid preferably being made of carbon, the braiding angle that makes the or each braid (6) with the axis of symmetry (X) of the pipe (2) preferably being substantially equal to 54° over at least one portion of the pipe, so as to avoid the temperature creep of the underlying layer, such as the internal layer (4), or of the thermoplastic matrix of the reinforcing layer, and to maintain this braid balanced on these layers when they are pressurised.

4. Conduit (1) according to one of the preceding claims, **characterised in that** the internal layer (4) is based on at least one polyamide which is selected from the group consisting of PA6, PA6.6, PA11, PA12 and mixtures thereof, and which has a reduced vitreous transition temperature Tg and, for example, near 45°C, a braiding angle substantially equal to 54° avoiding creeping at temperatures of use greater than this internal layer.

5. Conduit (1) according to claim 3, **characterised in that** the internal layer (4) is based on at least one thermoplastic elastomer, preferably a thermoplastic vulcanizate (TPV) alloy.

6. Conduit (1) according to one of the preceding claims, **characterised in that** said reinforcing means (6) of the reinforcing layer (5) are directly draped or engaged on the internal layer (4) which forms a functional draping core.

7. Conduit (1) according to one of claims 1 to 5, **characterised in that** said pipe (2) comprises, radially between the internal layer (4) and the adjacent reinforcing layer (5), at least one intermediate electrically conductive layer, for example provided to reduce the overall electrical conductivity of the pipe regarding risks of lightning strike and explosion of the fluid transported, said means for reinforcing the reinforcing layer being directly draped on the underlying intermediate layer.

8. Conduit (1) according to one of the preceding claims, **characterised in that** the reinforcing layer (5) and said reinforcing means (6) which are included there are such as defined by alternative (i) from method a), the latter being directly draped or engaged on the underlying layer, such as the internal layer (4).

9. Conduit (1) according to claim 8, **characterised in that** said reinforcing means (6) are dry-draped and infused under vacuum by means of said thermosetting matrix overmoulded in the liquid state, and **in that** the internal layer (4) preferably is based on at least one polyamide selected from the group consisting of PA6, PA6.6, PA11, PA12 and the mixtures thereof, this internal layer having a minimised thickness with respect to the depression used for this infusion under vacuum.

10. Conduit (1) according to claim 9, **characterised in that** said reinforcing means (6) are infused under vacuum by means of a thermosetting liquid resin selected from the group consisting of epoxy, bismaleimide (BMI), phenolic, polyester, vinylester, polyetherimide (PEI) resins and the mixtures thereof, and **in that** preferably the reinforcing layer (5) forms an epoxy/carbon or epoxy/aramid or epoxy/glass resin thermosetting composite, preferably being formed of one or more carbon braids (6) infused with an epoxy resin.

11. Conduit (1) according to claim 6 and according to claim 9 or 10, **characterised in that** the internal layer (4) forms a both draping and infusion core for said reinforcing means (6).

12. Conduit (1) according to claim 8, **characterised in that** said reinforcing means (6) are pre-impregnated by said thermosetting matrix, consolidated on contact with the underlying layer (4) of the pipe (2) then cross-linked.

13. Conduit (1) according to one of claims 1 to 7, **characterised in that** the reinforcing layer (5) and said reinforcing means (6) which are included there such as defined by alternative (ii) from method a), this reinforcing layer being formed:
- either of a continuous composite element such as a strip which contains said reinforcing fibres intermixed with said thermoplastic fibres or powders and which is wound around the internal layer (4),
- or one or more braids impregnated by said plastic polymeric coating, which can be cross-linked chemically, preferably by a "RIM" reaction type moulding, for example based on a polyurethane.

14. Conduit (1) according to one of claims 1 to 7, **characterised in that** said pipe (2) is obtained by method b), said reinforcing fibres (6), such as carbon, glass or aramid fibres being intermixed with said thermoplastic material to form the reinforcing layer (5) which is draped or engaged on the underlying layer, such as the internal layer (4), the thermosetting matrix of this reinforcing layer thus having a transformation temperature close to that of this underlying layer.

15. Conduit (1) according to one of the preceding claims, **characterised in that** it incorporates flanges (3) for connecting the pipe (2) to the remainder of the pipeline, each flange being made of a metal, thermoplastic or composite thermoplastic material, and being secured to said reinforcing means (6) by partially covering the latter in an end (5a) of the pipe, such that these reinforcing means ensure the mechanical continuity of the conduit.

16. Conduit (1) according to one of claims 9 to 11 and according to claim 15, **characterised in that** said reinforcing means (6) are surrounded on the two radially internal and external faces thereof by two collars (3a and 3b) of each flange (3), and are secured with these collars during the infusion by said thermosetting matrix overmoulded on these reinforcing means.

17. Conduit (1) according to claim 15 or 16, **characterised in that** each flange (3) is made of a thermoplastic or composite thermoplastic material and is intermixed or welded by rotation or ultrasound on the radially internal face of the internal layer (4) of the pipe (2), and **in that** preferably each flange (3) contains electrically conductive, for example, metal inserts, or insert(s) of conductive braid type, on which it is overmoulded, so as to obtain an electrical conductivity determined for the conduit or to be able to connect it electrically to the adjacent structures.

18. Conduit (1) according to one of the preceding claims, **characterised in that** said pipe (2) comprises an external sleeve defining the radially external surface thereof, this sleeve being, for example, intended to improve the physical properties and the chemical resistance of the pipe and/or to dampen the vibrations received and/or to ensure electrical and/or thermal insulation and/or to improve the stability to impacts of the pipe.

19. Aeronautical structure containing fluid transfer pipelines, **characterised in that** one or more conduits (1) of at least one of these pipelines is such as defined in one of the preceding claims.

20. Method for producing a conduit (1) according to one of claims 1 to 18, **characterised in that** it mainly comprises the following successive steps:
A) shaping the thermoplastic or thermoplastic elastomer internal layer (4) preferably by extrusion, with an optional deposition of at least one intermediate layer on this internal layer, to obtain a blank with a geometry which is either rectilinear, or curved and/or bent,
B) engaging on or draping *in situ* said reinforcing means (6) directly on this blank, which thus constitutes a functional engagement or draping core.
C) consolidating *in situ* these reinforcing means in contact with this core by a thermosetting or thermoplastic matrix with optionally, only in the case where step B) is implemented on a blank of rectilinear geometry, or moulding by blasting the rectilinear core softened by preheating, followed by this step B) for obtaining a multilayer structure of curved and/or bent geometry, then
D) cross-linking and/or cooling this multilayer structure, for obtaining the curved and/or bent pipe (2) and to the composite reinforcing layer (5), this cross-linking being, for example, carried out under vacuum in a heat chamber.

21. Method according to claim 20, **characterised in that** the blank shaped in step A), of initially rectilinear geometry, is subjected to hot-forming to obtain, in view of step B), an engaging or draping core (4) which is curved and/or bent beforehand and of preferably three-dimensional geometry, and **in that** preferably this hot-forming is implemented:
- either by locally heating the blank for a slimming with preheating,
- or by heating the assembly of the blank at a predetermined temperature, making the softening thereof possible and by blasting it or thermoforming it in a mould under an internal pressure, with no inflatable bladder.

22. Method according to claim 21, **characterised in that** steps B) and C) are implemented, according to alternative (i), by draping said reinforcing means (6), such as one or more braids, for example, made of carbon, on the curved and/or bent core (4) formed in A) with:
- either dry-draping said reinforcing means in step B) followed by the infusion under vacuum thereof in step C) by means of said thermosetting matrix overmoulded in the liquid state, such as an epoxy resin, this core thus constituting a functional draping and infusion core,
- or using, for this draping, a pre-impregnation that is consolidated in contact with the core in step C);
and **in that** preferably this dry-draping is implemented, followed by this infusion using a flexible vacuum cover or bag.

23. Method according to claim 21, **characterised in that** steps B) and C) are implemented, according to alternative (ii):
- either by winding around the core (4) of a continuous composite element such as a strip which contains said reinforcing fibres intermixed with said thermoplastic fibres or powders,
- or by impregnating said reinforcing means (6) by means of said plastic polymeric coating which can be cross-linked chemically, preferably by a "RIM" reaction type moulding, for example by means of a polyurethane.

24. Method according to claim 20, **characterised in that** step B) is directly implemented on a blank of rectilinear geometry obtained in step A), without hot-forming this blank.

25. Method according to one of claims 21 to 23, **characterised in that** it further comprises the securing in step C) of flanges (3) for connecting the pipe (2) with said reinforcing means (6), such that each flange partially covers the latter in an end (5a) of the pipe, such that these reinforcing means ensure the mechanical continuity of the conduit.

26. Method according to claims 22 and 25, **characterised in that** this securing is achieved by overmoulding said thermosetting matrix inherent to the infusion, by surrounding said reinforcing means (6) on the two radially internal and external faces thereof by two collars (3a and 3b) that each flange (3) comprises.

27. Method according to claim 25 or 26, **characterised in that** each flange (3) is intermixed or welded by rotation or ultrasound, which is preferably made of a thermoplastic or composite thermoplastic material, on the radially internal face of the internal layer (4) of the pipe (2).
